**Europäisches Patentamt**

**European Patent Office**

**Office européen des brevets**

(19)

(11) Veröffentlichungsnummer : **0 389 755 B1**

(12)

# EUROPÄISCHE PATENTSCHRIFT

(45) Veröffentlichungstag der Patentschrift :
**05.05.93 Patentblatt 93/18**

(51) Int. Cl.$^5$ : **A23L 1/185, A21D 2/38**

(21) Anmeldenummer : **90101954.7**

(22) Anmeldetag : **01.02.90**

(54) **Verfahren zur Herstellung eines Lebensmittels aus Getreide und dessen Verwendung.**

(30) Priorität : **31.03.89 DE 3910374**

(43) Veröffentlichungstag der Anmeldung :
**03.10.90 Patentblatt 90/40**

(45) Bekanntmachung des Hinweises auf die
Patenterteilung :
**05.05.93 Patentblatt 93/18**

(84) Benannte Vertragsstaaten :
**AT BE CH DE DK ES FR GB GR IT LI LU NL SE**

(56) Entgegenhaltungen :
**EP-A- 0 204 087**
**EP-A- 0 235 601**

(56) Entgegenhaltungen :
**DE-B- 2 851 053**
**LU-A- 68 123**
**NL-A- 8 401 771**
**L. Narziss, Abriss der Bierbrennerei, 1980, S. 20-66**

(73) Patentinhaber : **Ireks GmbH**
**Lichtenfelser Strasse 20**
**W-8650 Kulmbach (DE)**

(72) Erfinder : **Meyer, Bernd, Dr.rer.nat.**
**Petzmannsberger Strasse 15**
**W-8650 Kulmbach (DE)**

(74) Vertreter : **Rau, Manfred, Dr. Dipl.-Ing. et al**
**Rau & Schneck, Patentanwälte Königstrasse 2**
**W-8500 Nürnberg 1 (DE)**

EP 0 389 755 B1

## Beschreibung

Für die Herstellung von Broten gilt das Bestreben, diesen einen guten Geschmack, saftige Krume und eine lange Frischhaltung zu verleihen. Seit einigen Jahren besteht darüber hinaus zunehmend der Wunsch, möglichst alle Bestandteile des Getreidekornes in das Brot einzubringen, um dessen ernährungsphysiologischen Wert möglichst hoch zu machen. Aus diesem Grunde ist an sich die Verarbeitung oder Mitverwendung von ganzen Getreidekörnern besonders wünschenswert, die in der Brotkrume für den Verbraucher deutlich sichtbar zu erkennen sind und die dem Brot auch ein optisch ansprechendes Aussehen verleihen. Da Getreidekörner eine feste Schale und einen kompakten Kern aufweisen, quellen sie beim Backen nicht hinreichend durch und bleiben in der Brotkrume hart, was vom Verbraucher beim Kauen als störend empfunden wird.

Um das vorstehend angesprochene Problem zu lösen, wurde bereits versucht, die Saftigkeit der Brotkrume durch Einsatz von durch Einweichen vorgequollenen Getreidekörnern zu erhöhen. Dies setzt aber voraus, daß die Getreidekörner in noch feuchtem Zustand zu Brotteig verarbeitet und anschließend zu Brot verbacken werden. Lagerfähig sind diese feuchten Getreidekörner nicht. Unabhängig davon führt aber auch der Einsatz dieser durch Einweichen vorgequollenen Getreidekörner nicht zu dem gewünschten Ergebnis, da die Körner in der Brotkrume hart bleiben und als störend empfunden werden.

Man hat weiterhin versucht, das vorstehend angesprochene Quellen der Körner durch eine Wasserdampfbehandlung zu verbessern. Hierbei wird außer einer gewissen Vorquellung noch eine gewisse Verkleisterung der Stärke erreicht. Auch die mit Dampf behandelten Getreidekörner müssen aber im noch feuchten Zustand zu Teig verarbeitet werden, da sie nicht lagerfähig sind. Würden sie getrocknet und dann eingesetzt, so blieben sie in der Brotkrume hart bzw. würden sie schnell wieder hart, da die Stärke auch nach einer gewissen Verkleisterung in sehr kurzer Zeit wieder rekristallisiert. Außerdem wäre dieses Verfahren unwirtschaftlich. Darüber hinaus würden die Körner beim Trocknen zerrieben.

Eine weitere geringfügige Verbesserung wird durch Quetschen der Getreidekörner vor dem Quellen in Wasser erreicht. Nachteilig hierbei ist, daß zum einen im Brot keine äußerlich unversehrten Getreidekörner vorhanden sind und daß durch diese Art der Vorbehandlung die in den Getreidekörnern enthaltenen Inhaltsstoffe, wie Stärke, Protein usw. nur in sehr geringem Umfang, z.B. durch Enzyme, abgebaut werden. Die so behandelten und im Brot vorhandenen Getreidekörner tragen nur wenig zum Geschmack des Brotes bei. Außerdem rekristallisiert die Stärke nach dem Backen wieder in kürzester Zeit. Das Brot wird daher sehr schnell altbacken und die Körner werden hart. Das Brot hat daher nur eine sehr geringe Geschmacksfülle. Die Frischhaltung der Brotkrume bzw. deren Weichhaltung ist nicht zufriedenstellend.

Zur Verbesserung des Geschmacks und der Frischhaltung von Brot wurde auch bereits versucht, Malzmehle, Malzschrote oder ganze Malzkörner im Brotteig einzusetzen. In diesen Malzprodukten sind die Inhaltsstoffe des Getreidekornes, wie Stärke, Protein usw., bereits enzymatisch zumindest teilweise abgebaut. Die enthaltenen Enzyme sind aber gleichzeitig ein entscheidendes Hemmnis für den Einsatz dieser Malzprodukte, da sie in der Teig- und Backphase die Stärke des außer den Malzprodukten eingesetzten Mehles ebenfalls enzymatisch angreifen und zum Teil verzuckern. Dadurch wird die Krumenstabilität des Brotes zerstört, und man erhält feuchte, klebrige, ballige, schlecht kaufähige Krumen. Dieselbe Erscheinung übermäßiger Enzymaktivität tritt in feuchten Erntejahren auf und ist den Bäckern als sogenannter "Auswuchs" bekannt und wird von den Bäckern gefürchtet. Ein solcher übermäßiger Stärkeabbau tritt vor allem bei zerkleinertem, gemahlenem oder gequetschtem Malz bzw. Malzflocken auf, da dort die Oberfläche groß ist und die Enzyme frei liegen.

Andererseits haben vollständige, also noch nicht mechanisch teilweise zerstörte, getrocknete Malzkörner die Eigenschaft, wegen ihrer festen Schale nicht hinreichend zu verquellen, und zwar auch nicht im Teig oder im Brot. Sie bleiben also in der Brotkrume hart, was beim Kauen als störend empfunden wird. Feuchte Malzkörner, also Grünmalz sind wiederum nicht lagerfähig, da sie schnell verderben. Es sind daher auch bereits feuchte Malzkörner, also Grünmalz, gequetscht und dann zur Enzyminaktivierung getrocknet und geröstet worden, und zwar zum Teil auch unter Verwendung von Säure. Auch diese Körner sind im Brot nicht mehr als äußerlich unversehrte Körner vorhanden, da sie weitgehend zerfallen. Außerdem entsteht beim Rösten ein unangenehm dumpfer Geschmack, der im Brot erhalten bleibt.

Aus der DE-A-22 37 868 ist es bekannt, vermahlenes und getrocknetes Spitzmalz als Backmittel einzusetzen. "Malz" wird in der Weise hergestellt, daß Getreide in Wasser eingeweicht und nach ausreichender Wasseraufnahme zum Keimen gebracht wird. Dieses gekeimte Getreide wird als Grünmalz bezeichnet. Es ist noch feucht. Nach dem Trocknen entsteht Malz, das lagerfähig ist. Spitzmalz ist im Vergleich zu normalem Malz nur kurzzeitig gekeimt und besitzt daher nur eine entsprechende niedrigere Enzymaktivität, gleichzeitig aber auch einen geringeren enzymatischen Aufschluß der Inhaltsstoffe des Getreides. Ein solcher ausreichender enzymatischer Aufschluß der Inhaltsstoffe ist aber - wie oben bereits erwähnt - für die Frischhaltung und die Geschmacksausbildung des Brotes von entscheidender Bedeutung.

2

Der Erfindung liegt daher die Aufgabe zugrunde, ein Verfahren zur Herstellung eines Lebensmittels aus Getreide anzugeben, das gut haltbar und lagerfähig ist und das - gegebenenfalls gemeinsam mit anderen Komponenten, wie Mehl, Schrot, Sauerteig, Backmittel, Hefe, Salz usw. - besonders gut geeignet zur Herstellung von Backwaren, insbesondere Brot und Kleingebäck, mit hervorragender Frischhaltung und gutem aromatischem Geschmack geeignet ist.

Diese Aufgabe wird erfindungsgemäß durch die Merkmale des Anspruches 1 gelöst. Getreide wird in Wasser eingeweicht. Anschließend läßt man es keimen, und zwar 3 bis 7 Tage, vorzugsweise 5 bis 6 Tage, insbesondere 5 Tage bei Roggen und 6 Tage bei Weizen, wobei die Einweichzeit mitgerechnet ist. Dieses Einweichen des Getreides in Wasser und das anschließende Keimen ist ähnlich wie bei der Malzherstellung. Im Anschluß an diesen Keimvorgang, der - wie bei Malz üblich - bei ca. 15 bis 18°C erfolgt, wird das feuchte, enzymatisch voll aktive, gekeimte Getreide, bei dem es sich in der Regel um Grünmalz handelt, auf 40 bis 70°C, vorzugsweise 50 bis 60°C, insbesondere etwa 55°C, erwärmt und über einen Zeitraum von 8 bis 24 Stunden, vorzugsweise 10 bis 14 Stunden, insbesondere etwa 12 Stunden, einer Wärmebehandlung auf dieser Temperatur unterzogen, ohne daß der Feuchtigkeitsgehalt abgesenkt wird. Hierdurch wird die Enzymaktivität weiter gesteigert, und die Inhaltsstoffe des gekeimten Getreidekornes werden in einem so hohen Maße enzymatisch zu Verbindungen mit niedrigerem Molekulargewicht abgebaut, wie dies bei üblichen Mälzungs- und Keimungsvorgängen und den bisher bekannten anderen Verfahren zur Behandlung von Brotgetreide nicht der Fall ist.

Das erfindungsgemäße Verfahren wird ohne getreidefremde Stoffe oder Zusatzstoffe ausgeführt. Es wird lediglich Getreide, Wasser und Wärme eingesetzt. Hierbei entstehen ausschließlich auf völlig natürliche, biologische Weise innerhalb des unzerkleinerten, also mechanisch unbeschädigten Kornes durch die getreideeigenen Enzyme des gekeimten Kornes die Verbindungen mit niedrigem Molekulargewicht, die gut quellfähig sind und beim Backen den Geschmack verbessern und vor allem der Brotkrume eine bisher nicht erreichte Saftigkeit und Frischhaltung über viele Tage verleihen. Die ausgewählte Temperatur bei der Wärmebehandlung nach dem Keimen hat ferner den Vorteil, daß eine mögliche Schimmelentwicklung (Pilzbefall) vermieden wird.

Nach der beschriebenen Wärmebehandlung wird das feuchte, gekeimte Getreide schonend, d.h. bei Temperaturen von 55 bis 75°C getrocknet, ohne daß die Enzymaktivität wesentlich beeinflußt wird. Die Trocknung kann auf Malzdarren, Wirbelbett-Trocknern oder in anderer üblicher und bekannter Weise erfolgen. Die Temperatur bei der Trocknung sollte anfangs 55 bis 60°C nicht übersteigen, gegen Ende der Trocknung kann die Temperatur auf 60 bis 75°C erhöht werden. Der Rest-Feuchtigkeitsgehalt der getrockneten Körner soll möglichst unter 10 Gew.%, vorzugsweise im Bereich von 7 bis 10 Gew.%, liegen. Diese getrockneten Körner sind gut haltbar und lagerfähig, und zwar für sich allein oder auch in Mischung mit anderen Komponenten. Sie können also auch als Bestandteil einer Backmischung oder eines Fertigmehls zusammen mit diesem gelagert werden.

Diese getrockneten, enzymaktiven, gekeimten Getreidekörner, die nach wie vor eine mechanisch weitgehend unbeschädigte Außenschale aufweisen, enthalten in ihrem Inneren, gleichermaßen wie in einem Käfig eingeschlossen, die Enzyme und die gut quellfähigen, enzymatisch bis zum gewünschten Stadium aufgeschlossenen Inhaltsstoffe des Getreidekornes. Da diese Inhaltsstoffe von der schützenden unversehrten Kornschale wie von einer Hülle umschlossen sind, bedeuten sie für die Brotkrume selber bei der üblichen Brotbereitung im Gegensatz zu allen anderen bekannten Verfahren keine Gefahr, da sie nur in geringer Menge in die umgebenden Krumenbereiche eindiffundieren können. Die vorteilhaften Eigenschaften bleiben also im Korn erhalten, und gelangen nur zum Teil in einer günstigen, nicht zu hohen Dosierung in den Bereich der Krume, wo sie sonst im Überschuß nachteilig wären.

Nach einem Quellen mit Wasser liefern die in der geschilderten Weise behandelten Getreidekörner beim Backen und im fertigen Brot den vollen aromatischen, malzigen Geschmack und machen die Brotkrume außerordentlich saftig, da die Inhaltsstoffe des Getreidekornes enzymatisch weiter aufgeschlossen sind, als dies bei Malz oder erst recht in nur kurz gekeimtem Getreide, wie z.B. Spitzmalz, der Fall ist. Die Körner quellen sehr gut. Sie sind in der Brotkrume daher auch besonders weich und saftig und bleiben es über viele Tage.

Der Aufschlußgrad, d.h. das Maß in dem die Inhaltsstoffe des Kornes enzymatisch aufgeschlossen sind, läßt sich durch Dauer und Temperatur der Wärmebehandlung des eingeweichten und gekeimten Getreides in gewissen Grenzen beeinflussen.

Die gekeimten Getreidekörner verleihen der Brotkrume aufgrund ihrer natürlichen Eigenfarbe einen bräunlichen Farbton.

Die gekeimten Getreidekörner lassen sich in bekannter Weise mit den üblichen Komponenten, wie Mehl, Schrot, Sauerteig, Backmittel, Hefe, Salz usw. zu wohlschmeckenden, saftigen Broten, Brötchen und zu Kleingebäck verarbeiten.

Es ist empfehlenswert, die gekeimten, wärmebehandelten und getrockneten Körner im Quellstück vorzuquellen, z.B. allein oder mit Schrot und/oder Mehl. Hierbei sind Quellzeiten von 1 bis 2 Stunden günstig und ausreichend. Diese Quellzeiten sind deutlich kürzer als sonst bei Quellstücken üblich. Das übliche Quellen von Schrot im Quellstück erfolgt sonst über Nacht und dauert daher ca. 10 bis 12 Stunden. Wenn die in der erfindungsgemäßen Weise behandelten Getreidekörner allein, d.h. ohne Mehl mit heißem oder kochendem Wasser in einem Brühstück gequollen werden, dann führt dies ebenfalls zu guten schmackhaften Broten. Das Brühstück steht hierbei 2 bis 3 1/2 Stunden.

Da die geschmacklichen und die die Saftigkeit bringenden Vorzüge sehr ausgeprägt sind, genügt es, die in der geschilderten Weise aufgeschlossenen Getreidekörner mit nicht allzu großen Anteilen in einem Teig zu verwenden, wodurch bereits dem gesamten Brot der saftige wohlschmeckende Charakter und die lange Frischhaltung der Körner vermittelt wird. Es sind 10 bis 25 Gew.% solcher Körner bezogen auf das Gesamtgewicht des Fertigmehls jeweils in trockenem Zustand, ausreichend, wobei ohne weiteres aber auch höhere oder niedrigere Anteile eingesetzt werden können.

Das erfindungsgemäß behandelte Getreide kann in zerkleinerter Form als sehr wirksames, natürliches Frischhaltemittel oder als Geschmacksgeber eingesetzt werden, und zwar auch in anderen Gebäckarten als Brot, Brötchen od.dgl., nämlich bei Keksen, Dauerbackwaren, Waffeln usw. Die Dosierung ist hierbei deutlich niedriger; es werden vorzugsweise 2 bis 5 Gew.% bezogen auf das Gesamtgewicht der eingesetzten trockenen Stoffe wie Mehl und dgl. eingesetzt. Es kann in diesem Zusammenhang gegebenenfalls gemeinsam mit Genußsäuren oder Sauerteig eingesetzt werden. Für derartige Anwendungszwecke, insbesondere zur Geschmacksverstärkung werden die erfindungsgemäß behandelten Körner vorteilhafterweise auf einem beheizten Extruder, einem sogenannten Kochextruder, d.h. bei relativ hohen Temperaturen, extrudiert, damit die Enzymaktivität vermindert oder beseitigt wird. Andere Hitzebehandlungen zur Enzyminaktivierung sind auch möglich. Wenn das erfindungsgemäß behandelte Getreide als Frischhaltemittel, also zum Weichhalten des Gebäcks, eingesetzt wird, dann sollte eine solche Temperaturbehandlung zur Verminderung bzw. Beseitigung der Enzymaktivität nicht durchgeführt werden.

Das erfindungsgemäß behandelte Getreide enthält auch noch alle Vitamine des Getreidekornes und dessen Inhaltsstoffe in aufgeschlossener und aktivierter und damit gut resorbierbarer Form. Es ist von ausgezeichneter Bekömmlichkeit.

Das erfindungsgemäße Verfahren kann auch, insbesondere in großen Brotfabriken, in der Weise eingesetzt werden, daß der abschließende Trocknungsprozeß entfällt, d.h. das der Wärmebehandlung unterzogene gekeimte Getreide wird direkt in noch feuchtem Zustand zu Brot und Gebäck weiterverarbeitet. Es ist also nicht einmal notwendig, ein Quellstück herzustellen.

Nachfolgend werden einige Ausführungsbeispiele der Erfindung näher erläutert.

### Beispiel 1: Behandlung von Roggen

10 kg gut keimfähige Roggenkörner werden wie folgt behandelt:

| | |
|---|---|
| 1. Tag: | Einweichen in Wasser von ca. 15°C über einen Zeitraum von 3 Stunden. Anschließend Abtropfen auf einem Siebboden bei 15°C Raumtemperatur über 21 Stunden. Die Luftfeuchtigkeit wird hierbei nahe dem Sättigungspunkt gehalten, wozu die Roggenkörner beispielsweise mit feuchtem Filterpapier abgedeckt werden. |
| 2. Tag: | Erneutes Einweichen der Roggenkörner in Wasser von ca. 15°C über eine Zeitdauer von etwa 3 Stunden. Anschließend Abtropfen bei 15°C Raumtemperatur über einen Zeitraum von 21 Stunden. Die Körner weisen einen Wassergehalt von 38 bis 40 Gew.% bezogen auf ihr Gesamtgewicht in feuchtem Zustand auf. |
| 3. Tag: | Der Wassergehalt der Roggenkörner wird durch Aufsprühen von Wasser auf etwa 43 Gew.% erhöht. Die Körner werden bei einer Luftfeuchtigkeit von nahe 100%, also in feuchtigkeitsgesättigter Atmosphäre, bei 15°C Raumtemperatur gelagert und einmal gewendet. |
| 4. und 5. Tag: | Die Lagerung erfolgt wie am 3. Tag, lediglich ohne erneutes Einweichen bzw. Aufsprühen von Wasser. |

Durch die Behandlung der ersten 5 Tage werden die Körner zum Keimen gebracht.

| | |
|---|---|
| 6. Tag: | Die Temperatur wird bei unvermindertem Wassergehalt der Körner auf 55°C erhöht, z.B. durch Hindurchblasen von wasserdampfgesättigter Luft von 55°C im Umluftverfahren durch die feuchten und gekeimten Körner. Wenn die feuchten, gekeimten Körner diese Temperatur erreicht haben, werden sie 12 Stunden auf dieser Temperatur gehalten, ohne daß eine Trocknung stattfindet. Die relative Luftfeuchtigkeit wird auf 85 bis 100% gehalten, z.B. durch Belüftung der Körner auf einer Darre im Umluftverfahren. |

Nach Ablauf dieser Wärmebehandlung erfolgt das Trocknen der gekeimten, wärmebehandelten Körner, indem warme ungesättigte Luft von 55°C zugeführt und die feuchtigkeitsgesättigte Abluft abgeführt wird. Bei einer Temperatur von 55°C werden die Körner solange getrocknet, bis sie einen Wassergehalt von 7 Gew.% bezogen auf ihr Gesamtgewicht aufweisen. Die Trocknungsdauer beträgt - je nach Leistungsfähigkeit des Trocknungsaggregates - 5 bis 8 Stunden. Während der letzten 3 Stunden des Trocknungsprozesses kann die Temperatur der Trocknungsluft auf 60 bis 70°C erhöht werden.

Die getrockneten, gekeimten, vollständigen, mechanisch unversehrten Körner sind lagerfähig und zusammen mit den anhaftenden Keimlingen oder nach deren Entfernung verwendbar.

**Beispiel 2: Behandlung von Weizen**

Es werden gute keimfähige Weizenkörner entsprechend Beispiel 1 behandelt. Es werden getrocknete, gekeimte, mechanisch unversehrte Weizenkörner erhalten.

**Beispiel 3: Behandlung von Weizen**

Es werden gute keimfähige Weizenkörner entsprechend Beispiel 1 behandelt, wobei die Weizenkörner 6 Tage keimen. Die Behandlung am 6. Tage ist gleich der am 4. und 5. Tag.

Es werden getrocknete, gekeimte, mechanisch unversehrte Körner mit einer größeren Mürbung der Inhaltsstoffe als bei Beispiel 2 erhalten.

**Beispiel 4: Herstellung von Roggen-Mischbrot mit Roggenkörnern**

Eine Mischung aus

```
25o  g  gekeimten, getrockneten, mechanisch unver-
        sehrten nach Beispiel 1 behandelte Roggen-
        körner
1oo  g  Roggenfeinschrot
193  g  Weizenmehl (Type 55o)
 3o  g  Weizen- oder Roggenquellmehl
  7  g  Milchsäure
 2o  g  Salz
600  g
```

und

600 g Wasser von 25°C

werden miteinander verrührt und quellen dann 2 Stunden bei Raumtemperatur. Hierbei wird ein sogenanntes Quellstück erhalten. Zu diesem Quellstück werden

400 g Roggenmehl (Type 997)

30 g Wasser von 25°C

15 g Hefe

hinzugegeben. Dieser Teig wird 12 Minuten langsam in einem Hubkneter oder Spiralkneter, wie sie bei der Brotherstellung in Bäckereien üblich sind, geknetet.

Nach einer Teigruhe von 30 Minuten werden jeweils 1150g Teig in Blechkästen (Backformen, 27 cm lang, 10 cm breit, 10 cm hoch) eingelegt und 60 Minuten bei ca. 33°C zum Garen in einen Gärraum gestellt, dessen Luftfeuchtigkeit ca. 70% beträgt. Danach werden diese Teigstücke 60 Minuten gebacken, und zwar mit einer Anfangstemperatur (Einschießtemperatur) von 250°C, wobei die Temperatur des Ofens bis zum Ende des Backvorganges langsam auf eine Ausbacktemperatur von 200°C abfällt, wie dies vom Backen insbesondere in Steinöfen, bekannt ist. Anschließend kühlt das Brot aus. Das fertige Brot ist sehr schmackhaft und hat eine sehr saftige Krume, die auch nach mehreren Tagen nicht fest und altbacken wird, sondern angenehm weich bleibt. In der Krume sind die verquollenen, mechanisch unbeschädigten, gekeimten Körner gut sichtbar. Sie haben einen angenehm bräunlichen Farbton.

Wenn die Brote nicht in Kästen (Backformen), sondern in runden, länglichen oder sonstigen Formen frei auf der Herdfläche als sogenannte freigeschobene Brote gebacken werden sollen, ist die Garzeit auf 30 bis 35 Minuten und die Backzeit auf 50 Minuten zu verkürzen.

Die Mehltypen sind in Deutschland durch die 17. Durchführungsverordnung zum Getreidegesetz vom 21.07.1961, zuletzt geändert am 20.10.1981, definiert.

**Beispiel 5: Herstellung von Weizen-Mischbrot mit Roggenkörnern**

Die Bereitung des Quellstücks erfolgt wie bei Beispiel 4. Zum Quellstück von 1200 g Gewicht werden außer 30 g Wasser und 15 g Hefe anstelle des Roggenmehls 400 g Weizenmehl (Type 550) zugegeben. Die anschließende Behandlung ist wie im Beispiel 4. Man erhält ein sehr saftiges, schmackhaftes Brot, das weiche ganze Körner enthält und eine sehr lange Frischhaltung besitzt.

**Beispiel 6: Herstellung von Weizenmischbrot und Mischbrot mit Weizenkörnern**

Das Quellstück wird wie in Beispiel 4 hergestellt, wobei aber anstelle der nach Beispiel 1 behandelten Roggenkörner nach Beispiel 2 oder 3 behandelte Weizenkörner in gleicher Menge eingesetzt werden. Zum Quellstück von 1200 g Gewicht werden außer 15 g Hefe und 30 g Wasser entweder 400 g Roggenmehl (Type 997) oder 400 g Weizenmehl (Type 550) zugegeben. Die weitere Brotherstellung erfolgt wie im Beispiel 4. Für beide Varianten wird ein sehr saftiges, schmackhaftes Brot mit äußerlich unversehrten gequollenen Weizenkörnern erhalten. Auch diese Brote haben eine lange Frischhaltung.

**Beispiel 7: Herstellung eines Roggenmischbrotes mit Roggenkörnern unter Sauerteig-Einsatz**

1000 g nach Beispiel 1 behandelte Roggenkörner werden mit 1000 g Wasser von 30°C übergossen und 2 Stunden zum Quellen stehen gelassen. Diesem Quellstück werden

    800 g Weizenmehl (Type 812)
    1800 g Roggenmehl (Type 997)
    2800 g Roggensauerteig (Vollsauer; SG 10,4; pH 4,15; Teigausbeute 200)
    40 g Hefe
    80 g Salz
    440 g Wasser

zugegeben. Anschließend wird der Teig langsam bei einer Teigtemperatur von 28°C und einer Knetzeit in einem Hubkneter von 7 Minuten geknetet.

Die weitere Brotherstellung erfolgt wie im Beispiel 4. Es wird ein wohlschmeckendes, saftiges Sauerteigbrot mit gut sichtbaren, ganzen, gekeimten Roggenkörnern in der Krume erhalten. Die Frischhaltung ist sehr gut.

Unter "SG 10,4" versteht man den Säuregrad, der etwas über den Säuregehalt und damit den Reifegrad des Sauerteiges aussagt. Der Säuregrad wird nach den Standardmethoden für Getreide, Mehl und Brot der Arbeitsgemeinschaft Getreideforschung (siehe Arbeitsgemeinschaft Getreideforschung, Standard-Methoden für Getreide, Mehl und Brot, 6. Auflage, Detmold 1978) bestimmt.

Unter der Teigausbeute versteht man die Menge des gesamten Teiges bezogen auf 100 Teile Mehl.

**Beispiel 8: Herstellung von Roggenbrot mit höherem Roggenkornanteil**

Eine Mischung aus

    500 g nach Beispiel 1 behandelter Roggenkörner
    20 g Salz
    9 g Milchsäure
    71 g Weizenquellmehl
wird mit
    600 g Wasser von 25°C
vermengt und zur Quellung 2 Stunden stehen gelassen.

Dem so erhaltenen Quellstück werden

    400 g Roggenmehl (Type 997)
    15 g Hefe
    50 g Wasser von 25°C
zugegeben und der Teig entsprechend Beispiel 4 geknetet und zu Brot verbacken. Es wird ein sehr saftiges, wohlschmeckendes Brot mit vielen saftigen, mechanisch unversehrten, gut sichtbaren Körnern in der Krume erhalten. Das Brot bleibt besonders lange frisch, und zwar ca. 1 Woche.

EP 0 389 755 B1

**Beispiel 9: Herstellung eines Roggen-Mischbrotes mit Roggenkörnern aus Backmittelmischung**

Es wird eine lagerfähige trockene Backmischung aus

```
250 g gemäß Beispiel 1 behandelten Roggenkörnern
100 g Roggenfeinschrot
193 g Weizenmehl (Type 550)
 30 g Weizenquellmehl
  7 g Milchsäure, die adsorptiv an das
       Weizenquellmehl gebunden ist (saures Quell-
       mehl)
 20 g Salz
600 g
```

durch Mischen dieser Bestandteile hergestellt. Dieses Backmittel ist lager- und transportfähig, kann also als fertige Backmischung dem Bäcker geliefert werden.

Diesen 600 g Backmischung werden
  600 g Wasser von 25°C
hinzugefügt und durch Vermengen ein Quellstück bereitet, das 2 Stunden steht.
Dann werden
  15 g Hefe
  30 g Wasser
  400 g Roggenmehl (Type 997)
hinzugegeben und ein Teig bereitet und anschließend ein Brot gebacken, wie es jeweils in Beispiel 4 beschrieben ist. Es wird ein sehr gut schmeckendes, saftiges Brot mit langer Frischhaltung erhalten. Das Brot enthält gut verquollene, weiche, ganze Roggenkörner. Anstelle von 7 g Milchsäure können im Backmittel auch 5,2 g Zitronensäure verwendet werden.

**Beispiel 10: Herstellung von Brötchen mit Roggenkörnern**

  300 g Backmischung nach Beispiel 9
  300 g Wasser von 25°C
  10 g Salz
werden vermischt und 2 Stunden zur Quellung stehen gelassen. Dem Quellstück werden
  700 g Weizenmehl (Type 550)
  50 g Hefe
  280 g Wasser von 25°C
  25 bis 35 g eines handelsüblichen Brötchenbackmittels
zugegeben und mit diesem in üblicher Weise zu einem Teig geknetet, beispielsweise in einem Spiralkneter erst 1 Minute langsam und dann 5 Minuten schnell. Anschließend werden in üblicher Weise Brötchen hieraus geformt und gebacken. Es werden kräftige, sehr schmackhafte Brötchen mit Malzgeschmack und mechanisch unversehrten saftigen, weichen Roggenkörnern erhalten. Die Brötchen bleiben länger verzehrfähig als übliche Weizenbrötchen.

Als Brötchenbackmittel wird vorzugsweise ein solches mit dem Emulgator E 472 e eingesetzt, wie beispielsweise das von der Anmelderin unter der Handelsbezeichnung PRIMAT hergestellte und auf den Markt gebrachte Brötchenbackmittel. Anstelle dieses Backmittels können auch Backmittel mit anderen Emulgatoren, wie z.B. Lecithin oder Monoglyceride, eingesetzt werden.

**Beispiel 11: Zusatz gemahlenen, extrudierten, enzyminaktiven Roggens zu Brötchen**

Die gemäß Beispiel 1 behandelten Roggenkörner, von denen der Keimling mechanisch entfernt wurde, werden geschrotet. Anschließend wird der Schrot unter folgenden Extrusionsbedingungen extrudiert: Kochextruder Continua 83 der Firma Werner & Pfleiderer GmbH, Theodorstraße 10, 7000 Stuttgart 30

7

| Massestrom: | 3000 g Schrot/Min. |
|---|---|
| Wasserdosierung: | 0,1 l/Min. |
| Drehzahl: | 300 UpM |
| Drehmoment: | 10 % |
| Materialtemperatur: | 160°C |
| Druck: | 130 bar |
| Düsendurchmesser: | 4,5 mm |

Das erhaltene, trockene und gemahlene enzyminaktive Extrudat wird als Geschmacksgeber bei der Herstellung von Brötchen dem Teig zugegeben. Die Zugabemenge beträgt 15 g je 1000 g Weizenmehl. Damit werden in üblicher Weise Brötchen unter Verwendung eines handelsüblichen Brötchenbackmittels, beispielsweise des bereits erwähnten Brötchenbackmittels PRIMAT, hergestellt. Die erhaltenen Brötchen sind äußerst wohlschmeckend mit deutlichem Malzgeschmack. Auch die Krustenbräunung ist wesentlich stärker und angenehmer als ohne diesen Zusatz. Auch bei der Herstellung von französischen Weißbroten (Baguettes) wirkt sich ein Zusatz von 20 bis 30 g eines derartigen Extrudats je 1000 g Weizenmehl geschmacklich sehr vorteilhaft aus.

## Beispiel 12: Behandlung von Roggen

Es werden gut keimfähige Roggenkörner gemäß Beispiel 1 behandelt. Die Trocknung erfolgt anfangs bei 55°C. Am Ende wird die Temperatur der Trocknungsluft auf 70°C erhöht.

Es hat sich als vorteilhaft und zweckmäßig erwiesen, wenn die Temperaturbehandlung bei erhöhter Temperatur - wie vorstehend beschrieben - und bei Beibehaltung der Feuchtigkeit bis zu 16 und sogar 18 Stunden, bevorzugt aber 16 Stunden, durchgeführt wird.

Des weiteren sei klargestellt, daß die Standzeit der Quellstücke auch bis zu 3 bis 4 Stunden betragen kann. Entscheidend ist, daß es ausreichend lang steht, was üblicherweise nach 2 Stunden der Fall ist. Die Temperatur des zur Herstellung des Quellstücks eingesetzten Schüttwassers kann zwischen 25 und 50°C liegen.

## Patentansprüche

1. Verfahren zur Herstellung eines Lebensmittels aus Getreide, wobei Getreide angefeuchtet und zum Keimen gebracht wird, dadurch gekennzeichnet, daß das Getreide eingeweicht und über einen vom Beginn des Einweichens an gerechneten Zeitraum von 3 bis 7 Tagen zum Keimen gebracht und anschließend in feuchtem Zustand und unter dessen Aufrechterhaltung zu einer Wärmebehandlung auf eine Temperatur von 40°C bis 70°C gebracht und anschließend 8 bis 24 Stunden auf dieser Temperatur gehalten und danach schonend getrocknet wird.

2. Verfahren zur Herstellung eines Lebensmittels aus Getreide, wobei Getreide angefeuchtet und zum Keimen gebracht wird, dadurch gekennzeichnet, daß das Getreide eingeweicht und über einen vom Beginn des Einweichens an gerechneten Zeitraum von 3 bis 7 Tagen zum Keimen gebracht und anschließend in feuchtem Zustand und unter dessen Aufrechterhaltung zu einer Wärmebehandlung auf eine Temperatur von 40°C bis 70°C gebracht und anschließend 8 bis 24 Stunden auf dieser Temperatur gehalten wird.

3. Verfahren nach Anspruch 1 oder 2, dadurch gekennzeichnet, daß das Getreide 4 bis 6 Tage zum Keimen gebracht wird.

4. Verfahren nach Anspruch 3, dadurch gekennzeichnet, daß das Getreide 5 Tage zum Keimen gebracht wird.

5. Verfahren nach einem der Ansprüche 1 bis 4, dadurch gekennzeichnet, daß das feuchte gekeimte Getreide auf eine Temperatur von 50°C bis 60°C gebracht und auf dieser Temperatur gehalten wird.

6. Verfahren nach Anspruch 5, dadurch gekennzeichnet, daß das feuchte gekeimte Getreide auf eine Temperatur von etwa 55°C gebracht und auf dieser Temperatur gehalten wird.

7. Verfahren nach einem der Ansprüche 1 bis 6, dadurch gekennzeichnet, daß die Wärmebehandlung über 10 bis 14 Stunden erstreckt wird.

8. Verfahren nach Anspruch 7, dadurch gekennzeichnet, daß die Wärmebehandlung über 10 bis 12 Stunden erstreckt wird.

9. Verfahren nach einem der Ansprüche 1 und 3 bis 8, dadurch gekennzeichnet, daß die Trocknung mindestens während einer ersten Trocknungsphase etwa bei der Temperatur der Wärmebehandlung erfolgt.

10. Verfahren nach einem der Ansprüche 1 und 3 bis 9, dadurch gekennzeichnet, daß in einer zweiten Trocknungsphase die Trocknung mit einer Temperatur von 65°C bis 75°C, vorzugsweise bis 70°C, erfolgt.

11. Verfahren nach einem der Ansprüche 1 und 3 bis 10, dadurch gekennzeichnet, daß das Getreide bis zu einem Rest-Feuchtigkeitsgehalt von 7 bis 10 Gew.% bezogen auf das Gesamtgewicht des Getreides getrocknet wird.

12. Verfahren nach einem der Ansprüche 1 bis 11, dadurch gekennzeichnet, daß das Keimen bei einer Temperatur von etwa 15°C bis 18°C erfolgt.

13. Verfahren nach einem der Ansprüche 1 bis 12, dadurch gekennzeichnet, daß das Getreide am 1. und 2. Tag in Wasser von Umgebungstemperatur eingeweicht wird.

14. Verfahren nach Anspruch 13, dadurch gekennzeichnet, daß das Einweichen über einen Zeitraum von etwa 3 Stunden erfolgt.

15. Verfahren nach einem der Ansprüche 1 bis 14, dadurch gekennzeichnet, daß Roggen oder Weizen eingesetzt wird.

16. Verfahren nach einem der Ansprüche 1 und 3 bis 15, dadurch gekennzeichnet, daß das einer Wärmebehandlung unterzogene und getrocknete Getreide gemahlen wird.

17. Verfahren nach Anspruch 16, dadurch gekennzeichnet, daß das gemahlene Getreide einer Hitzebehandlung zur Enzyminaktivierung unterzogen wird.

18. Verfahren nach Anspruch 17, dadurch gekennzeichnet, daß das gemahlene Getreide einer Extrusion, vorzugsweise einer Kochextrusion, unterzogen wird.

19. Verfahren nach einem der Ansprüche 1 bis 6 und 9 bis 18, dadurch gekennzeichnet, daß die Wärmebehandlung über 10 bis 18 Stunden erstreckt wird.

20. Verfahren nach Anspruch 19, dadurch gekennzeichnet, daß die Wärmebehandlung über 15 bis 16 Stunden erstreckt wird.

21. Verwendung eines nach einem der Ansprüche 1, 3 bis 15, 18, 19 behandelten Getreides zur Herstellung von Brot, Brötchen od.dgl. Backwaren, wobei das Getreide gegebenenfalls mit weiteren Komponenten, wie Schrot, Mehl, Säure, Salz und dgl. gemischt und mit Wasser vermengt und als Quellstück stehengelassen wird.

22. Verwendung nach Anspruch 21, dadurch gekennzeichnet, daß das Getreide einschließlich der gegebenenfalls hinzuzufügenden Komponenten und Wasser jeweils etwa in gleicher Gewichtsmenge eingesetzt werden.

23. Verwendung nach einem der Ansprüche 21 oder 22, dadurch gekennzeichnet, daß das Quellstück etwa 2 Stunden steht.

24. Verwendung eines nach dem Verfahren nach einem der Ansprüche 16 bis 18 gekeimten, getrockneten und gemahlenen Getreides als Geschmacksverbesserer oder Geschmacksverstärker bei Backwaren, insbesondere Brötchen und Weißbrot.

## Claims

1. Method for making a foodstuff from cereals, whereby cereals are moistened and germinated, characterized in that the cereals are soaked and are germinated over a period of 3 to 7 days as from the beginning of the soaking and are subsequently brought with a heat treatment to a temperature of 40°C to 70°C while being in a moist state and while maintaining this state and are subsequently kept at this temperature for 8 to 24 hours and are then carefully dried.

2. Method for making a foodstuff from cereals, whereby cereals are moistened and germinated, <u>character-ized in that</u> the cereals are soaked and are germinated over a period of 3 to 7 days as from the beginning of the soaking and are subsequently brought with a heat treatment to a temperature of 40°C to 70°C while being in a most state and while maintaining this state and are subsequently kept at this temperature for 8 to 24 hours.

3. Method according to claim 1 or 2, <u>characterized in that</u> the cereals are germinated for 4 to 6 days.

4. Method according to claim 3, <u>characterized in that</u> the cereals are germinated for 5 days.

5. Method according to one of claims 1 to 4, <u>characterized in that</u> the moist germinated cereals are brought to a temperature of 50°C to 60°C and are kept at this temperature.

6. Method according to claim 5, <u>characterized in that</u> the moist germinated cereals are brought to a temperature of approximately 55°C and are kept at this temperature.

7. Method according to one of claims 1 to 6, <u>characterized in that</u> the heat treatment is extended over 10 to 14 hours.

8. Method according to claim 7, <u>characterized in that</u> the heat treatment is extended over 10 to 12 hours.

9. Method according to one of claims 1 and 3 to 8, <u>characterized in that</u> drying takes place at least during a first drying phase approximately at the temperature of the heat treatment.

10. Method according to one of claims 1 and 3 to 9, <u>characterized in that</u> in a second drying phase drying takes place at a temperature of 65°C to 75°C, preferably to 70°C.

11. Method according to one of claims 1 and 3 to 10, <u>characterized in that</u> the cereals are dried up to a residual moisture contents of 7 to 10 % by weight related to the total weight of the cereals.

12. Method according to one of claims 1 to 11, <u>characterized in that</u> germination takes place at a temperature of approximately 15°C to 18°C.

13. Method according to one of claims 1 to 12, <u>characterized in that</u> on the fist and on the second day the cereals are soaked in water having an ambient temperature.

14. Method according to claim 13, <u>characterized in that</u> soaking takes place over a period of approximately 3 hours.

15. Method according to one of claims 1 to 14, <u>characterized in that</u> rye or wheat is used.

16. Method according to one of claims 1 and 3 to 15, <u>characterized in that</u> the cereals, which are subject to a heat treatment and are dried, are ground.

17. Method according to claim 16, <u>characterized in that</u> the ground cereals are subject to a heat treatment for the purpose of enzyme activation.

18. Method according to claim 17, <u>characterized in that</u> the ground cereals are subject to an extrusion, preferably a cooking extrusion.

19. Method according to one of claims 1 to 6 and 9 to 18, <u>characterized in that</u> the heat treatment is extended over 10 to 18 hours.

20. Method according to claim 19, <u>characterized in that</u> the heat treatment is extended over 15 to 16 hours.

21. Use of cereals treated according to one of claims 1, 3 to 15, 18, 19 for making bread, rolls or like breads and pastries, whereby the cereals are mixed if necessary with further components, such as coarse meal, flour, acid, salt and the like and are mixed with water and is allowed to stand as a swelling piece.

22. Use according to claim 21, <u>characterized in that</u> the cereals including the components and water to be added if necessary are used approximately in an equal amount of weight, respectively.

23. Use according to one of claims 21 or 22, <u>characterized in that</u> the swelling piece is allowed to stand for approximately 2 hours.

24. Use of cereals germinated, dried and ground according to the method according to one of claims 16 to 18 as an enhancer or intensifier of taste for breads and pastries, in particular rolls and white bread.


**Revendications**

1. Procédé pour la fabrication d'un produit alimentaire à partir de céréale, dans lequel la céréale est humectée et mise à germer, caractérisé en ce que la céréale est macérée et mise à germer pendant une durée de 3 à 7 jours, comptée à partir du début de la macération, et ensuite soumise à un traitement thermique à une température de 40 à 70°C, à l'état humide et avec maintien de celui-ci, et ensuite maintenue pendant 8 à 24 heures à cette température, et après cela séchée de façon ménagée.

2. Procédé pour la fabrication d'un produit alimentaire à partir de céréale, dans lequel la céréale est humectée et mise à germer, caractérisé en ce que la céréale est macérée et mise à germer pendant une durée de 3 à 7 jours, comptée à partir du début de la macération, et ensuite soumise à un traitement thermique à une température de 40 à 70°C, à l'état humide et avec maintien de celui-ci, et ensuite maintenue pendant 8 à 24 heures à cette température.

3. Procédé selon la revendication 1 ou 2, caractérisé en ce que la céréale est mise à germer pendant 4 à 6 jours.

4. Procédé selon la revendication 3, caractérisé en ce que la céréale est mise à germer pendant 5 jours.

5. Procédé selon l'une des revendications 1 à 4, caractérisé en ce que la céréale germée humide est portée à une température de 50 à 60°C et maintenue à cette température.

6. Procédé selon la revendication 5, caractérisé en ce que la céréale germée humide est portée à une température d'environ 55°C et maintenue à cette température.

7. Procédé selon l'une des revendications 1 à 6, caractérisé en ce que le traitement thermique s'étend sur 10 à 14 heures.

8. Procédé selon la revendication 7, caractérisé en ce que le traitement thermique s'étend sur 10 à 12 heures.

9. Procédé selon l'une des revendications 1 et 3 à 8, caractérisé en ce que le séchage s'effectue, au moins pendant une première phase de séchage, aux environs de la température du traitement thermique.

10. Procédé selon l'une des revendications 1 et 3 à 9, caractérisé en ce que, dans une seconde phase de séchage, le séchage s'effectue à une température de 65 à 75°C, de préférence à 70°C.

11. Procédé selon l'une des revendications 1 et 3 à 10, caractérisé en ce que la céréale est séchée jusqu'à une teneur en humidité résiduelle de 7 à 10 % en poids, par rapport au poids total de la céréale.

12. Procédé selon l'une des revendications 1 à 11, caractérisé en ce que la germination s'effectue à une température d'environ 15 à 18°C.

13. Procédé selon l'une des revendications 1 à 12, caractérisé en ce que, le premier jour et le second, la céréale est macérée dans de l'eau à la température ambiante.

14. Procédé selon la revendication 13, caractérisé en ce que la macération s'effectue pendant une durée d'environ 3 heures.

15. Procédé selon l'une des revendications 1 à 14, caractérisé en ce que l'on utilise du seigle ou du blé.

16. Procédé selon l'une des revendications 1 et 3 à 15, caractérisé en ce que la céréale, soumise à un traitement thermique et séchée, est moulue.

17. Procédé selon la revendication 16, caractérisé en ce que la céréale moulue est soumise à un traitement thermique pour l'inactivation d'enzymes.

18. Procédé selon la revendication 17, caractérisé est ce que la céréale moulue est soumise à une extrusion, de préférence à une cuisson-extrusion.

19. Procédé selon l'une des revendications 1 à 6 et 9 à 18, caractérisé en ce que le traitement thermique s'étend sur 10 à 18 heures.

20. Procédé selon la revendication 19, caractérisé en ce que le traitement thermique s'étend sur 15 à 16 heures.

21. Utilisation d'une céréale traitée selon l'une des revendications 1, 3 à 15, 18, 19, pour la fabrication de pain, petits pains ou produits de boulangerie similaires, la céréale étant éventuellement mélangée avec d'autres composants, tels que du gruau, de la farine, de l'acide, du sel et similaires, et avec de l'eau, et étant mise à reposer sous forme de pâton à gonfler.

22. Utilisation selon la revendication 21, caractérisée en ce que l'on utilise la céréale, y compris les composants à ajouter éventuellement et l'eau, dans chaque cas approximativement en la même quantité pondérale.

23. Utilisation selon la revendication 21 ou 22, caractérisée en ce que le pâton à gonfler est mis à reposer pendant environ 2 heures.

24. Utilisation d'une céréale mise à germer conformément au procédé selon l'une des revendications 16 à 18, séchée et moulue, en tant qu'agent d'amélioration du goût ou de renforçateur de goût dans des produits de boulangerie, notamment des petits pains et du pain blanc.